# EUROPEAN PATENT APPLICATION

(11) **EP 0 965 923 A2**
(43) Date of publication of application: **22.12.1999**
(21) Application number: 99304833.9
(22) Date of filing: 21.06.1999
(51) Int. Cl.: G06F 11/14

(54) **System and method for secure software component containment**

(30) Priority: 19.06.1998 US 89894 P; 30.10.1998 US 183771
(71) Applicant: Intellution Inc., Norwood, Massachusetts 02062 (US)
(72) Inventor: Powley, John J., Mansfield, Massachusetts 02048 (US); tham, Jeffrey, Quincy, Massachusetts 02170 (US)
(74) Representative: Garratt, Peter Douglas

(57) **Abstract**

An application is provided that may be modified to include one or more software components. The application views documents and executes software components that are produced by other software vendors. If a component fails, the application is configured to detect and handle the failure so that the application will not terminate. The application continues to operate normally without the failed component's functionality.

## Description

This non-provisional application claims the benefit under Title 35, U.S.C. §119(e) of co-pending U.S. Provisional Application Serial No. 60/089,894, filed June 19, 1998, entitled "SYSTEM AND METHOD FOR SECURE SOFTWARE COMPONENT CONTAINMENT" by John J. Powley and Jeffrey Tham, incorporated herein by reference.

The field of the invention relates to software components, and more specifically to the containment of exceptions produced by software components.

Providing error-free software is a goal of all software developers. Attaining this goal, however, is time consuming and costly due to additional programming costs involved with coding and testing. Therefore, different commercial software developers provide various degrees of quality in their software. Historically, when a user purchased a software application, the application was created by one vendor, developer or company, and this company was solely responsible and accountable for the quality of the software.

When an application fails or "crashes," the application is generally terminated by the operating system and data within the application is lost. Typically, a "crash" would occur when an application experienced an error condition that would cause the application to cease functioning in a proper manner. These failure conditions, in most cases, are attributable to programming faults in the software application. In particular, these programming faults relate to the programmer not anticipating a mode of the application in which a nonstable state is encountered during operation. This nonstable state may occur when a variable assumes a value that is out of range, such as when a division by zero occurs, or when an illegal function is performed. These unexpected actions are termed "exceptions" and can take many forms.

After a fault or "bug" is identified in the software application, the user would contact the software company and obtain fixes for the application. If the user could not get satisfactory results from the company, then typically the software application would be returned or not purchased again. Therefore, high quality software is clearly a competitive advantage to those companies that can provide reliable, "crash free" or "bug free" code.

Software in the past was generally provided as a single executable program. Software applications typically included a core application and a series of executable modules or libraries that may be invoked by the core application. These modules or libraries were linked into a single executable program when the application was compiled. To repair programming faults in a single application, generally, the program needed to be repaired and recompiled.

The software industry has progressed to allow programs to dynamically link program modules while the core application was running. These modules are referred to in the art as Dynamically Linked Libraries (DLLs). Faults in these DLLs could also cause an application to fail.

The Microsoft Corporation, with its introduction of ActiveX (formally called OLE (Object Linking and Embedding)) technology for the Windows operating systems, provides a method by which software applications are constructed (Microsoft, ActiveX and Microsoft Windows are registered trademarks of the Microsoft Corporation. The Windows operating system and ActiveX technology are available from the Microsoft Corporation, Redmond, WA).

ActiveX technology provides software components (or objects) that may be embedded in a document or application to enable code reuse. ActiveX technology eliminates several limitations of DLLs, and may be extended to other operating systems. Software companies that support ActiveX technology can utilize functionality from other software vendors to provide additional capabilities to end-users of their software. An example of this would be a software vendor that writes software code for a word processing application but uses, through ActiveX, the software component for a spell checking feature in word processing application. The code for the spell checking feature may be provided by another software company. The goal of ActiveX technology is for companies to build specialized, reusable software components that can be shared. By combining these components, new software applications may be constructed faster and with more functionality than previously possible.

Operating systems currently have the ability to detect application failures during execution. In some computer applications, it is imperative that operating system code handle application failures so that the computer does not have to be shutdown and restarted. As operating systems have matured, the ability of applications to detect their own failures became available in the form of exception handlers. These exception handlers are programming devices inserted in the application program and are used to detect and correct errors. If an exception is detected by the operating system, the operating system verifies if an exception handler is programmed in the application. If an exception handler exists, then the operating system calls the handler to allow the application to "fix" or handle the exception. If the application handles the exception then it is possible for the application to continue running as if an error had not occurred. If the exception were not handled by the application, then the exception would be handled by the operating system. The operating system handler would terminate the application that generated the exception and indicate an error. In some cases, however, exceptions may cause the operating system to fail.

Although the technology of exception handling has been around for many years, many software companies do not incorporate handlers in their applications. Proper testing of code was thought to have rendered exception handlers unnecessary. Another reason that exception handlers are not used is because of the added cost. Additional programming resources are required to implement these handlers. In general, it is very difficult to determine what corrective actions the application should take so that the software can continue to execute normally.

As discussed, an "exception" is an event that is unexpected or disrupts the ability of a process to proceed normally. Exceptions can be detected by both hardware and software. Hardware exceptions include dividing by zero and overflow of a numeric type, for examples. Software exceptions include those an application may detect and signal to the system by calling, for example, a function referred to as the "Raise exception" function in Windows 95 or Windows NT. A programmer can generally write more reliable code using exception handling. For example, a programmer can ensure that resources, such as memory blocks and files, are properly closed in the event of unexpected termination of an application or component. Exception handlers can also handle specific problems, such as insufficient memory, with concise, structured code that does not rely on elaborate testing of return codes.

The traditional approach to exception handling involves passing error codes: one function detects an error and passes an error code to its caller. This process may continue through many levels, until the error is communicated to the function that can properly respond to the error. If there is a weak link in the chain of function calls, the procedure of handling the exception fails. Structured exception handling avoids propagation of error codes. After an exception handler using structured exception handling is installed, the exception handler from one level to another can handle the exception no matter how many other functions are called. Thus, a first function can handle an exception raised inside a second function called by the first function.

Previously, the term "exception handlers" is used in a generic sense, but there are actually two types of handlers. There are exception handlers that can respond to or dismiss the exception. Also there are termination handlers that are called when an exception causes termination inside a block of code. These two types of handlers are distinct, yet they are closely related through a process called "unwinding the stack." When an exception occurs, an operating system such as Windows 95 or Windows NT look for the most recently installed exception handler that is currently active. The handler can do one of three things:
- Pass control to other handlers (fail to recognize the exception);
- Recognize but dismiss the exception; or
- Recognize and handle the exception.
The exception handler that recognizes the exception may not be in the function that was running when the exception occurred. In some cases it may be in a function much higher on the stack. The currently running function, as well as all functions on the stack frame, are terminated. During this process, the stack is "unwound"; local variables of terminated functions, unless they are static variables that do not change value, are cleared from the stack.

As the operating system unwinds the stack, the operating system calls any termination handlers the programmer writes for each function. By using a termination handler, a programmer may clean up resources that otherwise would remain allocated due to abnormal termination. If the application enters a critical section, the application can exit in the termination handler. If the application is shutting down, a termination handler may perform other housekeeping tasks such as closing and removing temporary files.

Using ActiveX technology, an exception may occur in the code of another software vendor. Because there are a large number of software vendors, each producing multiple ActiveX controls, it becomes an impossible task to determine how to correct exceptions in each control and how to continue application execution successfully in every case.

Also, there are many parts to Microsoft's ActiveX technology to be considered. Each part represents a functional entity that makes up the composite of ActiveX technology. ActiveX technology utilizes another Microsoft technology referred to in the art as the Component Object Model or COM. COM specifies a software coding standard such that communication between software code can occur without any knowledge of implementation. This communication is accomplished by defining interfaces to the section of software code. Interfaces define the calling functions that need to be supported so that one section of software code can communicate with another completely separate section of code. COM also defines how two sections of code can determine interfaces so that communication can occur. COM is not a programming language per se, but a method of writing code using conventional languages, including Visual Basic, C++, Java, as well as others (Visual Basic is a registered trademark of the Microsoft Corporation, Java is a registered trademark of Sun Microsystems, Inc.). ActiveX utilizes COM and defines how software components can interact with one another. Understanding ActiveX and OLE by David Chappel, Microsoft Press 1996 and Inside COM by Dale Rogerson, Microsoft Press, which describe ActiveX and COM are hereby incorporated herein by reference.

ActiveX technology may be implemented in an electronic document. An example of an electronic document is an HTML markup language document. Other document types are available. Electronic documents may be viewed within a software application that interprets the format of the electronic document. Software applications that view electronic documents are well-known. Examples include the Netscape Navigator viewer application available from the Netscape Corporation and the Microsoft Internet Explorer viewer application available from the Microsoft Corporation.

An electronic document may "contain" or embed ActiveX controls within the document structure. These controls are then loaded and executed by the document viewer. An ActiveX control is a software component that provides additional functionality within a document or program. Many ActiveX controls are available that provide a variety of functions. Among these controls is a label control that displays text at any given angle. The label control may also render text along user-defined curves. A marquee control scrolls, slides, or bounces electronic documents within a user-defined window. A menu control may display a menu button or pull-down menu in the document view. A timer control invokes an event periodically and is invisible during execution. Many other ActiveX controls are known in the art of ActiveX programming.

There are problems with the current software applications in that when a control fails, the entire application fails. These failures cause users to lose data and may require the operating system to be restarted. In computing environments where high availability of the computer system is required, these failures are unacceptable. Therefore, the application's reliability depends on the fault tolerance of the controls used by the application.

Existing software vendors have not implemented technology needed to provide users with a fail-safe environment for implementing controls not having exception handlers. Most ActiveX controls available in the market are constructed using C++ tools without exception handlers. To use these controls, a method for handling exceptions produced by these controls is needed.

One aspect of the present invention provides a base application that may be modified to include one or more software components. This base application may view documents and/or execute software component code. If another component fails, the base application detects the failure and handles the failure so that the application will not terminate. Instead, the application will continue to operate normally without the failed component's functionality.

These and other advantages are provided by a system for providing software component containment including an application configured to process and view an electronic document having a software component associated with the document. The application includes a processor configured to execute the software component and an exception handler for identifying an exception created by the software component in response to detecting the exception, the exception handler being capable of terminating an execution of the software component without terminating an operation of the application.

In another aspect, a method is provided for providing containment of software components including steps of executing an application having a processor capable of loading and executing a software component, detecting an exception produced by a software component, terminating an execution of the software component in response to detection, and indicating to a user that the software component is unavailable.

Further features and advantages of the present invention as well as the structure and operation of various embodiments of the present invention are described in detail below with reference to the accompanying drawings.

In the drawings,
Fig. 1 is a data flow diagram illustrating a computer as an example embodiment in which an embodiment of the present invention may be used;
Fig. 2A is a block diagram of a conventional relation between an application, document, and controls;
Fig. 2B is a block diagram of a relation between an application, document, and controls in one embodiment;
Fig. 3 is a flow diagram of an exception handling process;
Fig. 4 is a process for installing an exception handler;
Fig. 5 is a flow diagram of a process for determining a cause of an exception;
Fig. 6 is process for performing corrective action for a control;
Fig. 7 is an example display of a document generated by an application; and
Fig. 8 is an example display of a document generated by an application whose control is disabled.

The following detailed description should be read in conjunction with the attached drawing in which similar reference numbers indicate similar structures. All references cited herein are expressly incorporated by reference.

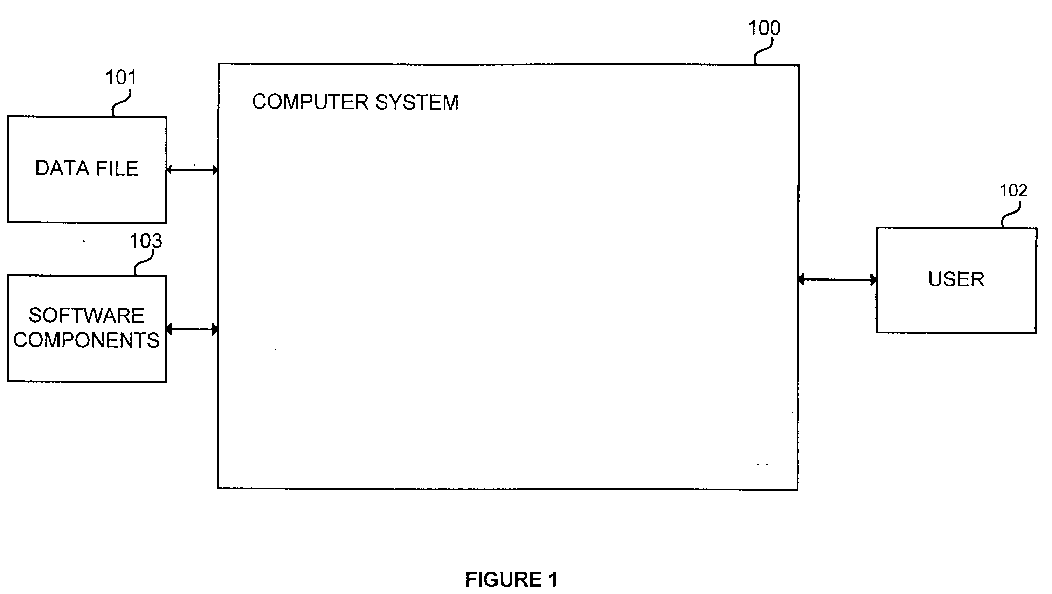

Fig. 1 illustrates a computer system 100 which receives as one input a data file 101 which contains an electronic document, such as an HTML type document. The computer system 100 typically includes an output device which displays information to a user 102. The computer system includes a main unit connected to the output device and an input device, such as a keyboard. The main unit generally includes a processor connected to a memory system via an interconnection mechanism. The input device is also connected to the processor and memory system via the connection mechanism, as is the output device.

It should be understood that one or more output devices may be connected to the computer system. Example output devices include a cathode ray tube (CRT) display, liquid crystal displays (LCD), printers, communication devices such as a modem or network interface, and audio output devices. It should also be understood that one or more input devices may be connected to the computer system. Example input devices include a keyboard, keypad, track ball, mouse, pen and tablet, communication device, audio input and scanner. It should be understood that the invention is not limited to the particular input or output devices used in combination with the computer system or to those described herein.

The computer system 100 may be a general purpose computer system which is programmable using a high level computer programming language, such as the "C", "C++", ActiveX, and "Java" programming languages. Other programming languages are available. The computer system may also be specially programmed or special purpose hardware. In a general purpose computer system, the processor is typically a commercially available processor, of which the series Intel x86 processors, such as the Pentium II processor with MMX technology available from Intel and similar devices from AMD and Cyrix, and the 680X0 series microprocessors available from Motorola are examples (Pentium and Intel are registered trademarks of the Intel Corporation, MMX is a trademark of the Intel Corporation, AMD is a trademark of Advanced Micro Devices, Inc., Cyrix is a registered trademark of the Cyrix Corporation, and Motorola is a trademark of Motorola, Inc.). Many other processors are available. Such a microprocessor executes a program called an operating system, of which the Windows NT, Windows 95, UNIX, DOS, VMS, ULTRIX, IRIX, Solaris, VxWorks, OS/Warp, MacOS, and IntranetWare operating systems are examples (Windows, DOS, and Microsoft are registered trademarks; and Windows NT is a trademark of the Microsoft Corporation, VMS and ULTRIX are trademarks of Digital Equipment Corporation, IRIX is a registered trademark of Silicon Graphics, Inc., Solaris is a registered trademark of Sun Microsystems, OS/Warp is a registered trademark of International Business Machines, Inc., and MacOS is a registered trademark of the Apple Corporation). The operating system controls the execution of other computer programs and provides scheduling, debugging, input/output control, accounting, compilation, storage assignment, data management and memory management, and communication control and related services. The processor and operating system define a computer platform for which application programs in high-level programming languages are written.

A memory system typically includes a computer readable and writeable nonvolatile recording medium, of which a magnetic disk, a flash memory and tape are examples. The disk may be removable, such as a floppy disk or removable hard drive, or permanent, such as an internal hard drive. A disk has a number of tracks in which signals are stored, typically in binary form, i.e., a form interpreted as a sequence of ones and zeros. Such signals may define an application program to be executed by the microprocessor, or information stored on the disk to be processed by the application program. Typically, in operation, the processor causes data to be read from the nonvolatile recording medium into an integrated circuit memory element, which is typically a volatile, random access memory such as a dynamic random access memory (DRAM) or static random access memory (SRAM). Other memory types are available. The integrated circuit memory element allows for faster access to the information by the processor than does the disk. The processor generally manipulates the data within the integrated circuit memory and then copies the data to the disk when processing is completed. A variety of mechanisms are known for managing data movement between the disk and the integrated circuit memory element, and the invention is not limited to any one. It should also be understood that the invention is not limited to a particular memory system.

It also should be understood the invention is not limited to a particular computer platform, a particular processor, or a particular high-level programming language. Additionally, the computer system 100 may be a multiprocessor computer system or may include multiple computers connected over a computer network.

The present invention is also suitable for implementation in a network environment, such as the Internet or an Intranet, which connects a server to a client or browser. The server may be a hypertext transfer protocol (HTTP) server which makes document files, and possibly software components 103 such as ActiveX components, commonly referred to in the art as a "control", available to the browser (or viewer) application. There are many commercially available HTTP servers.

These components 103 may also be Java applets written in the Java programming language, a well-known object-oriented language. Components are generally software objects that may be loaded, executed, and referenced during the execution of an application, such as a viewer application. These components are usually provided as individual objects of a software library, and may be used by a programmer in constructing a program, thereby promoting code reuse. The ability of an application to dynamically load (and unload) a component provides flexibility for an application programmer to load and execute code only when needed. This ability is provided by components having the ability to link dynamically. Dynamic linking is well-known in the software arts. An example of programs implementing dynamic linking includes DLLs available in the Microsoft Windows 95 and NT operating systems, among others.

DLLs may include one or more components that may be loaded and used by an application. Applications may also share a single DLL, thereby conserving space in the memory of the computer system. These components may be, for example, ActiveX controls. An ActiveX control is one type of component that performs specific functions. Other component types are available. Software programmers may load one or more ActiveX controls into an application to take advantage of the controls' capabilities. The application may be programmed in a programming language such as Visual C++, C++, Borland C++, Visual Basic, SmallTalk or other programming language.

As is known, ActiveX controls utilize Component Object Model (COM), as discussed above. COM is a programming method that allows developers to create reusable objects and interfaces for these objects. ActiveX controls are actually COM objects that may be implemented in an ActiveX control container defined by the ActiveX specification. A control container is client software that may utilize an ActiveX control. An example of a control container includes the Microsoft Internet Explorer and Microsoft Outlook applications. Other applications that function as an ActiveX container are available.

COM provides basic mechanisms for one software entity to provide services to another (referred to as a client) through well-defined interfaces. These well-defined interfaces assume a format known as the Interface Description Language (IDL). IDL allows a programmer to define an interface's name, and an Interface Identifier or IID. The IID may be a globally-unique identifier (GUID) which is an identifier which uniquely identifies the object. In COM, a universal interface, termed IUnknown, is provided to each ActiveX (and COM) object interface. Each ActiveX object interface inherits methods defined in the IUnknown interface.

IUnknown contains three methods: QueryInterface, AddRef, and Release. Because every ActiveX object includes IUnknown, other software entities may query an ActiveX object to determine pointers to its other interfaces by using the QueryInterface method. To use the QueryInterface method, a client invokes the method on any interface pointer for the ActiveX object. The client passes the IID of the interface needed as a parameter of the QueryInterface method. If the ActiveX object supports the interface specified by the IID, the object will return a pointer of the interface to the client. The client may invoke the ActiveX object's methods. If the object does not support the interface specified by the IID, the object returns a NULL value to the client.

The AddRef method allows a client to increment a reference counter. This reference counter keeps track of the number of clients that is referencing an object. The Release method allows a client to decrement the reference count. A reference count having a value of zero (0) indicates that no clients are using the object, and that the object may be removed from memory. When the reference count reaches zero (0), the object typically uninstatiates or unloads itself.

ActiveX (and COM) objects may be implemented within a DLL and execute within the same computer process as that of the client. Also, objects may be implemented in a separate process running on the same computer system as that of the client. ActiveX objects may also be implemented in a DLL or separate process on a different computer system than the system of the client using Distributed COM or DCOM. It should be understood that the object and the application could be implemented in other locations. By using the Query Interface, AddRef and Release Methods, objects may be discovered, created, and destroyed.

The viewer application on the client and the server generally communicates by transferring HTTP messages over the network, and the client and server typically use the TCP/IP networking protocol to transfer these HTTP messages. It is understood that other networking protocols, file transfer protocols and servers may be used.

An application suitable for implementing the invention includes the viewer application. It should be understood that other applications may be used. The viewer application may be any application that can view electronic documents such as HTML or XML documents. For the purposes of processing ActiveX components, the viewer application should be capable of executing ActiveX control programs written in an appropriate programming language. An example of a viewer includes the Microsoft Explorer application available from the Microsoft Corporation. Other viewer programs are available. ActiveX programs may be written by using the Visual C++, Borland C++, Visual Basic, and other programming tools. A basic set of ActiveX controls are available from the Microsoft Corporation in the form of the ActiveX Software Development Kit (SDK).

As discussed above, one aspect of the present invention provides a base application that may be modified to include one or more software components. This base application may view documents and execute software component code. If a component from another software vendor fails, the base application will detect and handle the failure so that the application will not terminate. Instead, the application will continue to operate normally without the failed component's functionality.

The application allows any software component such as an ActiveX component from any software vendor to be "dropped in" or accessed by the base application to expand the base application's functionality. This application provides the ability to customize applications to fit specific needs. As discussed above, companies that support ActiveX technology have become reliant on software components that were written by other software companies without their control. If these software components are used in mission-critical applications, failures of these components during operation are unacceptable. Also, component failures in other non-critical applications may not be desired. Secure ActiveX containment provided for by various embodiments of the invention protects the application and operating system of such component failures.

No other software vendor of which the applicants are presently aware provides a fail-safe environment when implementing ActiveX controls. Microsoft's Visual Basic version 5.0 provides support on catching an exception. However, exception handling is built into the controls themselves, and as discussed above, most companies do not create handlers within their components. Further, the capability of programming exception handlers only applies to ActiveX controls built using Microsoft's Visual Basic 5.0. Most ActiveX controls on the market today are built using C++ tools, and existing tools for building and testing exception handlers in C++ are inadequate. Further, there is no method available of which the applicants are presently aware for handling exceptions for existing software components not having exception handlers. In contrast, secure ActiveX containment according to various embodiments of the invention is independent of how the ActiveX control was built. The solutions provided herein are unique because they addresses all cases of potential ActiveX failures generically from within the containment application.

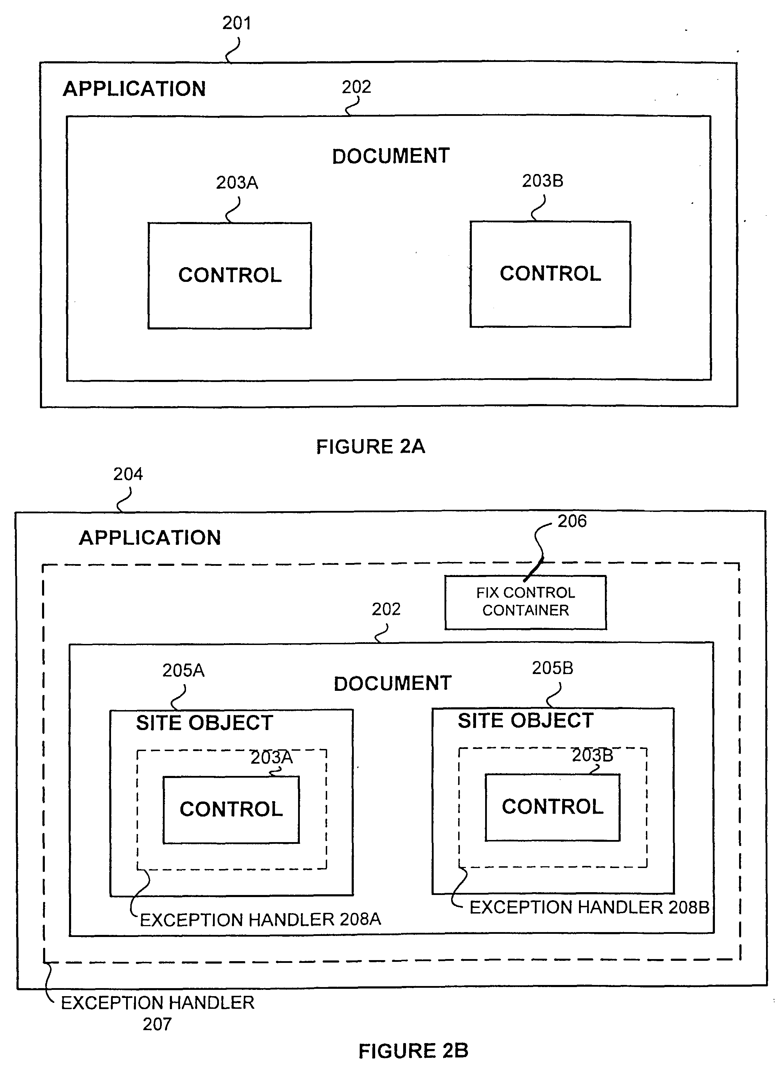

Fig. 2A shows a conventional application 201 that is capable of viewing a document 202 and executing controls 203A, 203B within the document. If, while loading or executing these controls, an exception occurs, the application 201 may cease to function correctly. Fig. 2B shows an embodiment of the invention wherein an application is protected against exceptions raised by controls 203A, 203B. Control 203 referred to hereinafter may be control 203A or 203B, which are examples of control 203. A site object 205A, 205B is provided for each control that is executed in the application. Site object 205 referred to hereinafter may be site object 205A or 205B, which are examples of site object 205. The site object encapsulates all of the ActiveX support required when an ActiveX control is embedded in an ActiveX document. The site object performs all of the interface negotiations with the ActiveX control. Secure containment code is implemented within the Fix Control Container 206 and all of the site objects 205 to support the above conditions.

There are several areas to be protected during the loading and execution of an ActiveX control. These areas include:
1. Insertion of the ActiveX control
2. Window messaging that is passed to the ActiveX control
3. ActiveX controls that do not have windows
4. Timers that an ActiveX control might use
5. Forms that may contain ActiveX controls

It should be understood that ActiveX controls are just one example of a control that may be used with the present invention. Many other controls that may be loaded by an application.

**The insertion of the ActiveX control** - Before the application executes an ActiveX control in the ActiveX document, additional code is executed before the ActiveX control becomes available for use. Specifically, when the ActiveX control is inserted into the ActiveX document, the fix control container 206 creates a site object 205. This site object 205 includes exception handler code 208 (shown are handlers 208A and 208B corresponding respectively to site objects 205A and 205B) that encapsulates calls made during the initial interface communication. For example, if an application 204 attempts to query control 203A using the QueryInterface method, site object 205A will respond to the request by providing a pointer to a site objects' interface in lieu of an interface of control 203A. Through encapsulation and hiding the control's interface, containment of the control 203A is provided by site object 205A. If any one of these calls to the ActiveX control causes an exception, the user may be notified by displaying a message box in a message that an exception has occurred. The application 204 may then unload the ActiveX control that produced the exception. The site object may also visually indicate to the user that this ActiveX control is not functional. The application may also keep a list of site objects and/or controls that have been loaded.

**Window messaging that is passed to the ActiveX control** - Most ActiveX controls have graphical user interface windows associated with them. A graphical user interface (GUI) window is generally a graphical interface of an application used to collect or display information to a user. The GUI window may be a separate interface from a main operating system user interface or may be the operating system interface itself. Applications may use one or more GUI windows to allow the ActiveX control to interact with the user and to draw information on the screen. Normal operational communication from within the application and window-based controls occurs through these windows.

Interactions by a user with a window may cause the window to produce messages. These messages produced by the windows are sent to the main application by the operating system, which are then directed into the ActiveX control. An exception handler 207 is placed around the main application's message loop. If one of these messages causes an exception inside the ActiveX control 205, the exception is caught by application 204. Application 204 then calls a Fix Control Container object 206 to inspect the list of site objects to see if the windows are associated with any of its ActiveX controls 205. This inspection may be performed by sequentially evaluating each site object in the list for an identifier that matches the window associated with the control. If the exception was caused by an ActiveX control 205, then the application notifies the user by displaying a message box that an exception has occurred. The application then unloads the ActiveX control that caused the exception. The site object may indicate to the user that this ActiveX control is not functional. This indication may be performed visually though the user interface.

**ActiveX controls that do not have windows** - When an ActiveX control does not have a window, it is the responsibility of the containment application to pass messages along to the ActiveX control. In one embodiment, site object 205 has an exception handler 208 that encapsulates all code that would call the ActiveX control. For example, when executing a method of an ActiveX control 203A, application 204 executes a method of the site object 205A that corresponds to the method of the ActiveX control 203A. When the method of site object 205A is executed, exception handler code is executed prior to executing the site object 205A method. Therefore, if the application passes a message to the ActiveX control which in turn causes an exception, the application 204 has the ability to handle the exception, notify the user and indicate to the user that the control is not functional.

**Timers that an ActiveX control might use** - An ActiveX control may create a timer. A timer is a piece of software that may utilize the system time function to time the display of messages. For example, an ActiveX control may create a Windows timer to provide more functionality with the Microsoft Windows 95, 98, NT or other operating system environments. To provide for secure containment, it may be desired to have the application analyze timer messages that occur in the application. If an exception occurs while timer code is running, the application detects and handles the exception and calls the Fix Control Container object 206 to determine if the exception was caused inside of an ActiveX control. The cause of the exception is determined by inspecting timer callback address and matching it to a code address of the ActiveX control. If it is determined that the exception was caused inside of ActiveX control code, then the application may stop the timer control, notify the user, and indicate to the user that the control is not functional.

**Forms that may contain ActiveX controls** - ActiveX technology allows ActiveX controls to assume hierarchical relations among controls. It is possible that a component may implement support for ActiveX controls, which in turn would cause nested controls inside the application. Microsoft's Visual Basic for Application (VBA) forms may have nested controls. Specifically, a form may contain other ActiveX controls. To support secure containment in this case, exception handler code may be placed around the VBA implementation code before the code is loaded by the application. All messages for VBA forms are channeled through a call VBA Component Manager Site Push Message that acts as an interface to the VBA form. If an exception occurs inside of a form, the application notifies the user and dismisses the form. Notice that this exception handler 208 handles all code inside of the form and is not specific to ActiveX controls.

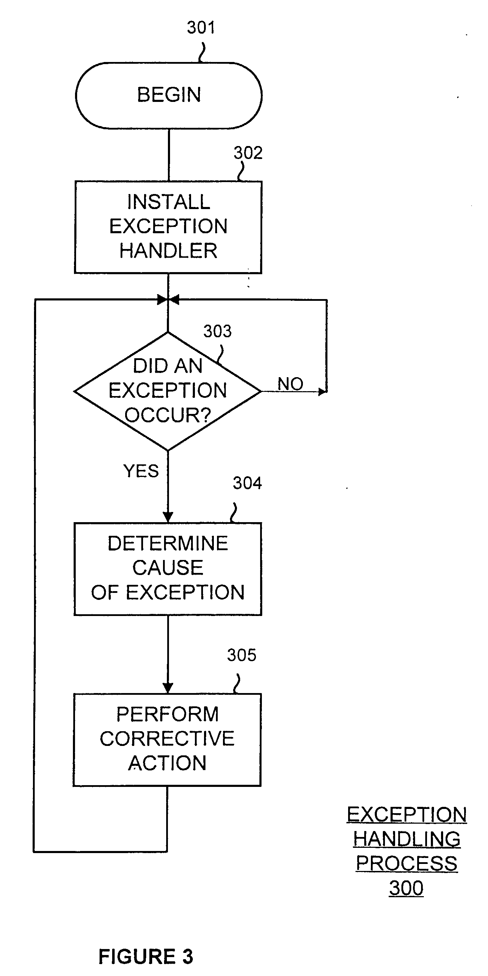

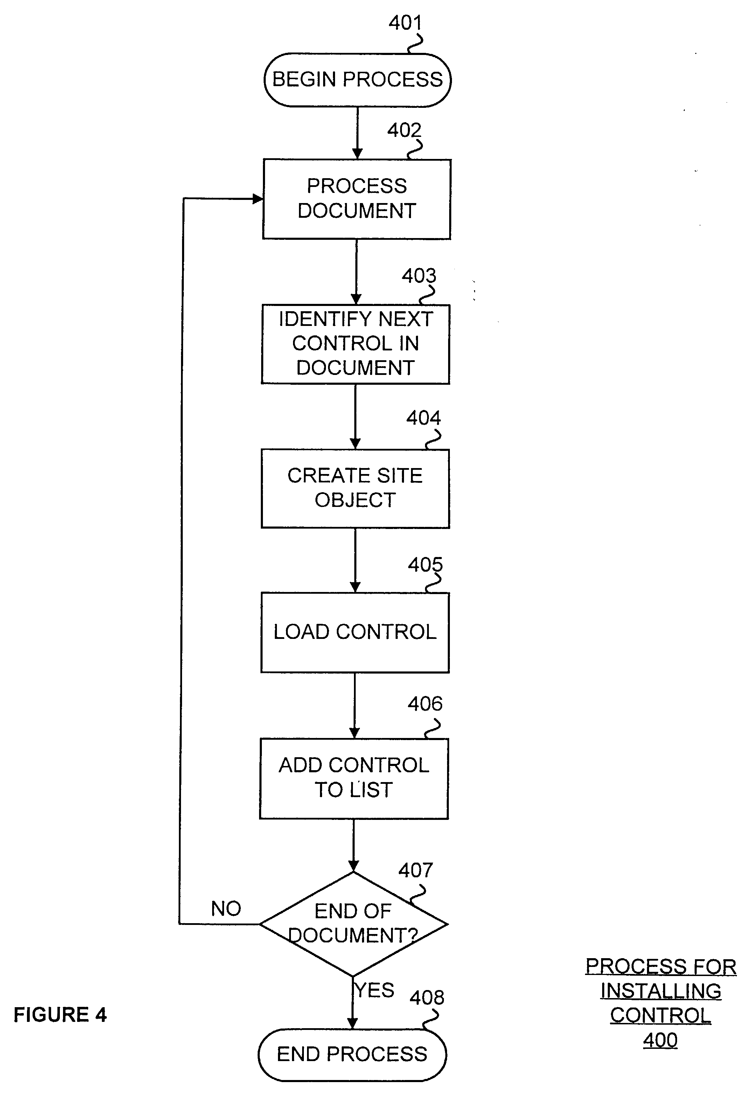

Fig. 3 is a flow diagram of a process 300 of handling an exception by application 304 according to an embodiment of the invention. At step 301, the process begins. At step 302, application 204 installs a separate exception handler 208A, 208B around each control 203A, 203B. This installation process is discussed in more detail below with reference to Fig. 4. At step 303, application 204 determines if an exception occurred. The exception may be attributable to one or more controls 203A, 203B or may have been raised by the application 204 itself. If an exception did not occur, the process executing the application remains in the application code where exception handler 207 is installed. If an exception did occur, application 204 determines the cause of the exception at step 304 described in more detail with respect to Fig. 4. At step 305, application 204 and/or site objects 205A, 205B may perform corrective actions to process the exception.

Fig. 4 is a flow diagram of a process 400 for installing a control 203. At step 401, process 400 begins. At step 402, application 204 processes a data file 101 that includes a document 202 having one or more controls 103 within the document. At step 403, application 204 identifies the next control in the document. At step 404, application 204 creates a site object 205 that encapsulates the control 203. Specifically, application 204 constructs additional code surrounding the interface of the control object. The control object interface may be determined in a well-known manner using COM. At step 605, application 204 loads and executes control 203. At step 406, application 204 adds control 203 to a list of controls in document 202. This list includes information to uniquely identify each control, such as a window handle or window process address. At step 407, application 204 determines if it is at the end of the document. If not, application 204 will continue to process the document 202 to identify and load additional control objects. If the end of the document is reached, the process ends at step 408.

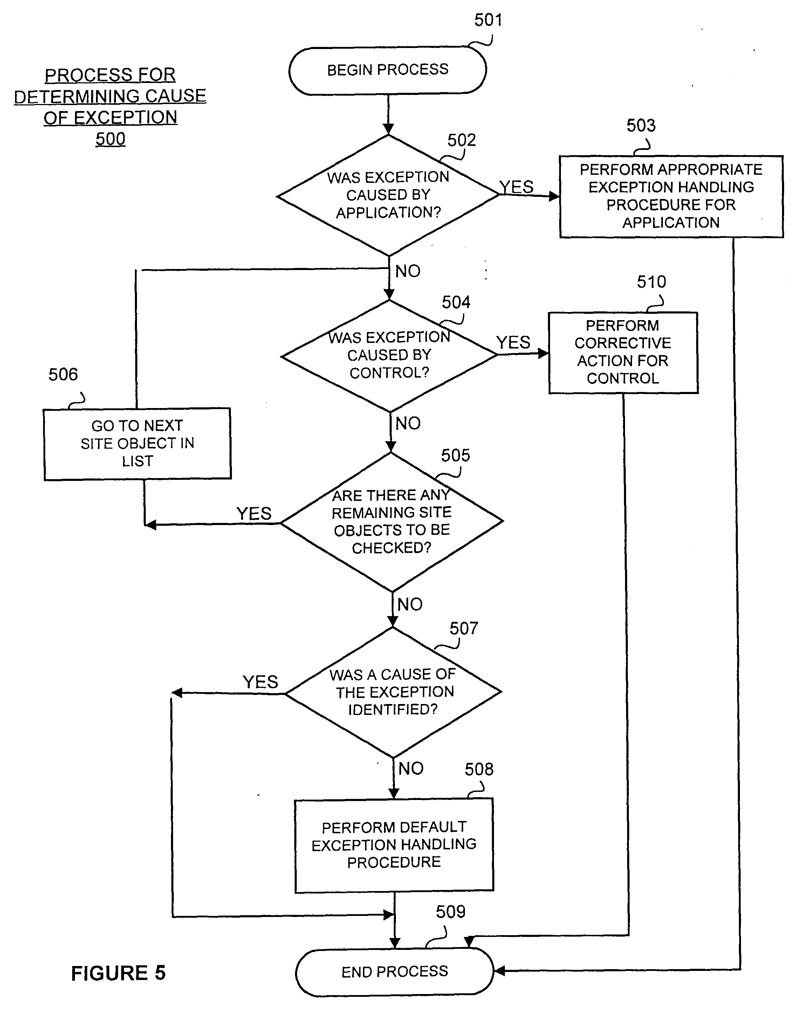

Fig. 5 is a flow diagram of a process 500 for determining the cause of the exception. At step 501, process 500 begins. At step 502, application 204 determines if the exception was caused by the application 204 itself. If the exception was caused by application 204, application 204 will perform appropriate exception handling procedure for the application 204. At step 504, application 204 determines if the exception was caused by the control by identifying a window handle that belongs to the control, and comparing it to a windows handle stored in the list of controls created by application 204. A handle is generally an identifier that identifies a software object or process, and generally assumes a unique value for each software object or process on a computer system. If the window handle is a null value, application 204 may search the window process handle that belongs to the control to identify the control. If application 204 identifies the control, application 204 performs corrective actions. If, at step 504, application 204 determines that the exception was not caused by the control, application 204 will evaluate other controls in the document. At step 505, application 204 will determine if there are any remaining controls to be checked. If there are unchecked controls, process 500 will evaluate the next control in the list. If not, application 507 may determine if a cause was identified. If not, a default exception handling procedure may be performed at step 508. This procedure may be a general exception handling procedure that performs general cleanup of application 204.

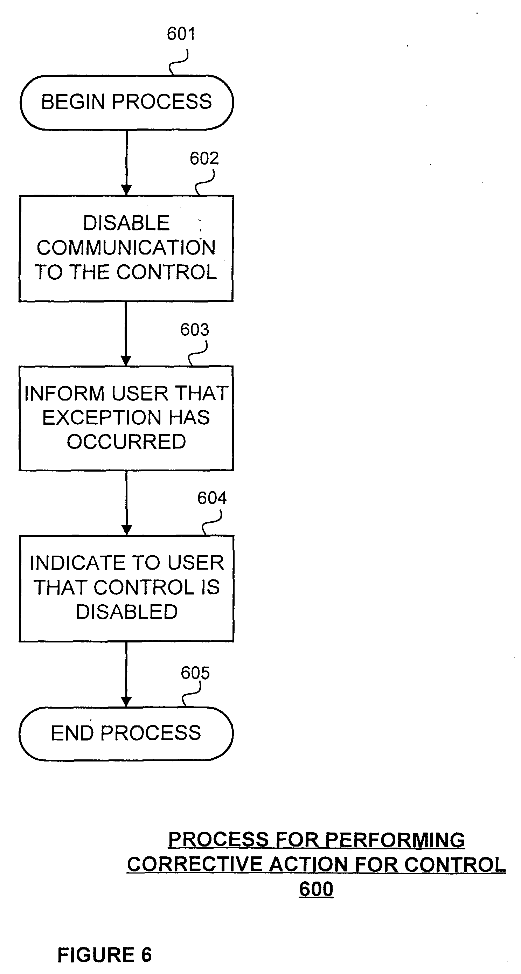

Fig. 6 is a flow diagram of a process 600 for performing a corrective action once the source of the exception has been determined. At step 601, process 600 begins. At step 602, application 204 disables communication to the control by disabling the interface to the control by the site object 205. In one embodiment, the Fix Control Container 206 and site objects 205 perform process steps of process 600. At step 603, application 204 informs the user that an exception has occurred. Notice to the user may be given by a pop-up window including a message that indicates which control has failed. At step 604, application 204 may optionally indicate to the user that the control that caused the exception is now unavailable. Within the document viewer graphical user interface, the site object 205 may graphically indicate that the control is disabled by highlighting (i.e., graying out) the control within the interface. For example, if the control is a spell-checking control and the control had a menu entry associated with it to initiate the spell-checking function, the document viewer may gray out the option on the menu, thereby not allowing a user to use the spell-checking function. At step 605, process 600 ends.

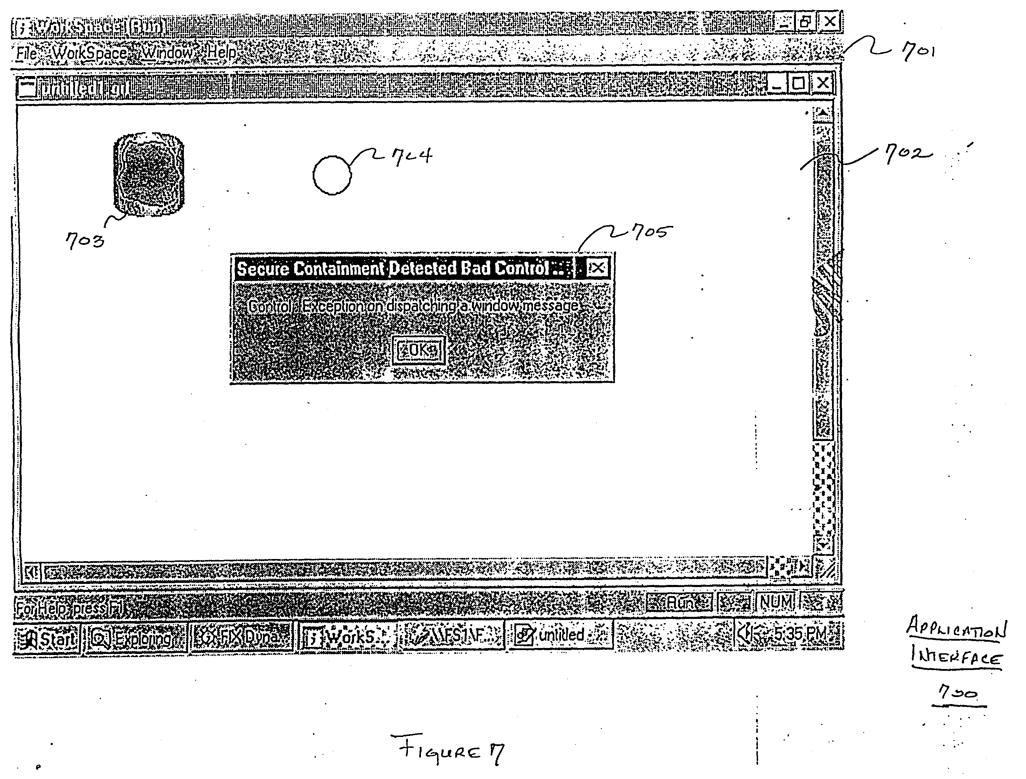

Fig. 7 shows an example application interface 700 that may display document 202 and its controls 203. The application interface 700 may be, for example, rendered in the Windows 95 graphical user interface. Alternatively, the application interface may be rendered in a graphical user interface of the Windows NT, Windows 98 or other comparable operating system. Application 204 may display a work space 701 that serves as the main graphical user interface for the application 204. Window 702 is capable of displaying a document and displaying graphics associated with controls. Controls including window functions may generate graphics associated with the displayed document. These controls may be, for example, controls 203A and 203B discussed above. For example, 703 is a graphic displayed by the execution of a control. Likewise, a control may also display a graphic 704. When an exception is generated by a control object associated with a graphic object 704, a message box 705 may be provided to the user including a message that indicates that the control associated with graphic 704 has generated an exception. This message box may be displayed by the application in response to detecting the exception.

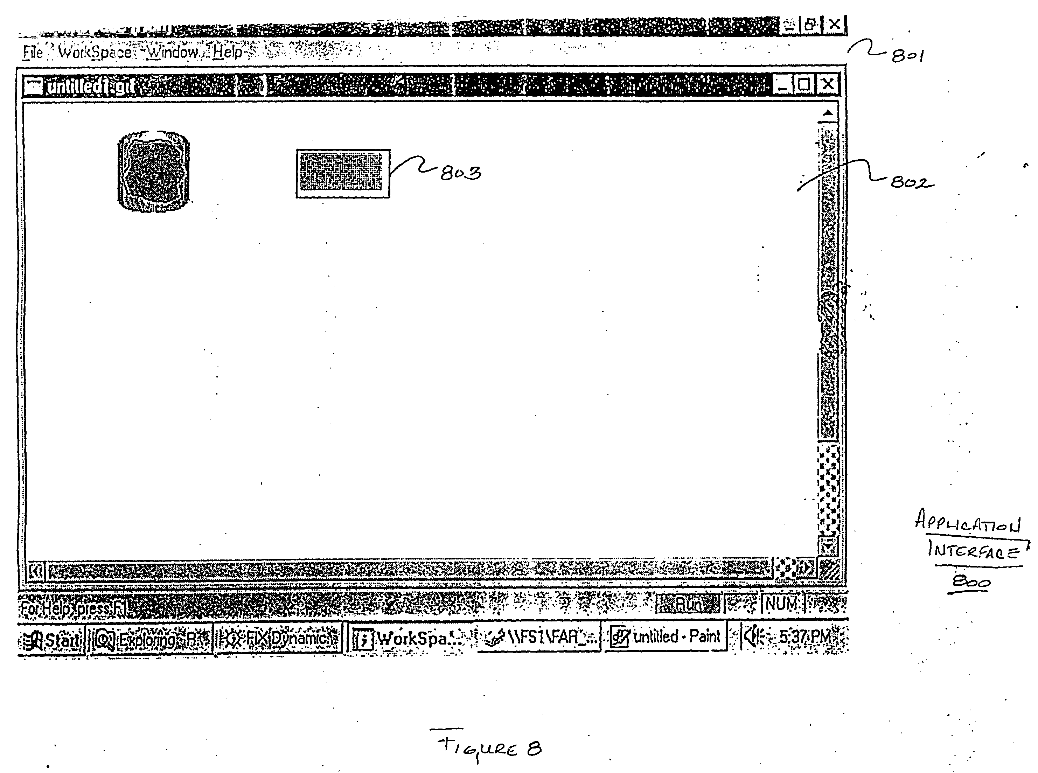

Fig. 8 shows an application interface 800 that has returned to normal operation after experiencing an exception. After the exception was handled by application 204, work space 801 continues to operate normally and document 202 is still displayed in window 802. However, application 204 may disable a control, such as a control associated with graphic 704, and graphically indicate to the user that the control is not available. Application 204 may indicate a disabled control by graying out the area in which the graphic of the control was located. An example of this grayed area is shown as item 803. As an option, the interface 702 may ask the user if they want the exception handled by the application, if they wish to continue to use work space 701, or other options with regard to the application or exception.

In the Windows NT and 95 systems, structured exception handling is performed by try/exception and try/finally command pairs for exception handlers and termination handlers, respectively. These command pairs are referred to in the art as try blocks, that is, blocks of code that begin with the try command and end with the exception or finally qualifiers. These try blocks may be nested within each other. These statements are placed around an area of code suspected of generating an exception condition. For example the following block of code illustrates a termination handler: 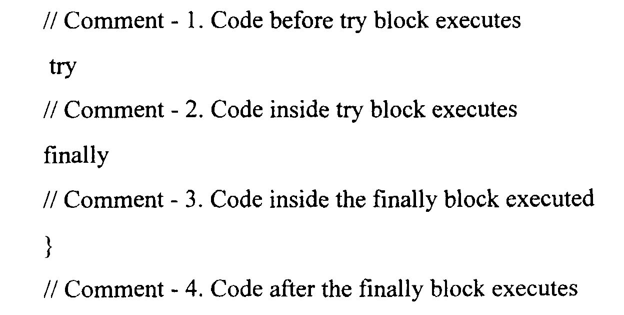 For a termination handler, a programmer may execute code as a result of an exception. For an exception handler, the programmer may detect and handle an exception. For example, the following block of code illustrates an exception handler:

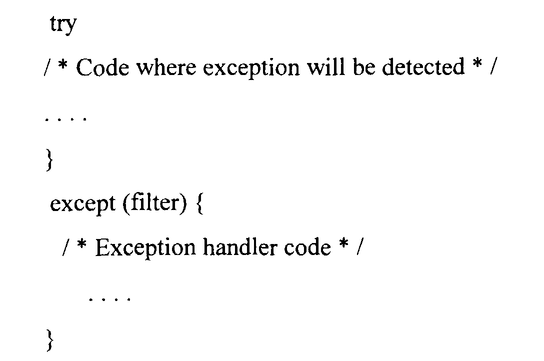

It should be understood that the Windows NT and 95 operating systems are several types of operating systems that may be used to implement exception handling. For example, this implementation of exception handlers may be performed in the UNIX operating system using signals as are known in the art of UNIX programming.

In one embodiment of the present invention, the main message loop may include a main try/except loop, and may include try/except blocks encapsulating ActiveX interface calls. For example the following pseudo code illustrates the main message loop:

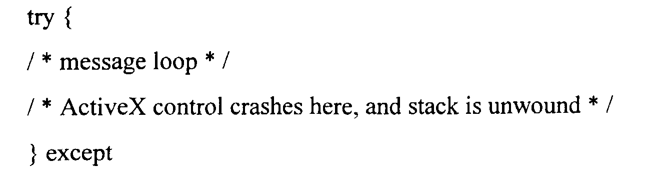

Other code configurations may be implemented that can catch an exception produced by an ActiveX component.

Having now described a few embodiments of the invention, it should be apparent to those skilled in the art that the foregoing is merely illustrative and not limiting, having been presented by way of example only. Numerous modifications and other embodiments are within the scope of one of ordinary skill in the art and are contemplated as falling within the scope of the invention as defined by the appended claims and equivalents thereto.

## Claims

1. A system for providing software component containment comprising:
an application configured to process and view an electronic document having a software component associated with the document, the application comprising:
a processor configured to execute the software component; and
an exception handler for identifying an exception created by the software component, the exception handler configured to terminate an execution of the software component without terminating an operation of the application.

2. The system according to claim 1, wherein the exception handler instantiates a site object that encapsulates the software component.

3. The system according to claim 2, wherein the site object is a software that provides an interface to the software component.

4. The system according to claim 2, wherein the site object includes an exception handler that encapsulates code of the software component.

5. The system according to claim 3, wherein the site object includes an exception handler that encapsulates an interface of the software component.

6. A method for providing software component containment comprising steps of:
executing an application having a processor configured to load and execute a software component;
detecting an exception produced by the software component;
terminating an execution of the software component; and
indicating to a user that the software component is unavailable.

7. The method according to claim 6, wherein the step of indicating includes a step of graying an area where a visual representation of the software component is located.

8. The method according to claim 6, further comprising the step of processing the software component to determine an interface of the component.

9. The method according to claim 8, further comprising the step of encapsulating, with an exception handler, the component interface.
